# EUROPÄISCHE PATENTSCHRIFT

(11) **EP 0 670 333 B1**
(45) Veröffentlichungstag und Bekanntmachung des Hinweises auf die Patenterteilung: **26.01.2000**
(21) Anmeldenummer: 95102397.7
(22) Anmeldetag: 21.02.1995
(51) Int. Cl.: C08F 2/10, C08F 220/04, C02F 1/54

(54) **Vernetzte wasserlösliche Polymerdispersionen**
Watersoluble crosslinked polymer dispersions
Dispersions de polymères réticulés solubles à l'eau

(30) Priorität: 01.03.1994 DE 4406624
(43) Veröffentlichungstag der Anmeldung: 06.09.1995
(73) Patentinhaber: Röhm GmbH, 64293 Darmstadt (DE)
(72) Erfinder: Carl, Joachim, Dr., D-64291 Darmstadt (DE); Quis, Peter, Dr., D-64289 Darmstadt (DE); Braum, Manfred, D-55122 Mainz (DE); Desch, Wolfram, D-64331 Weiterstadt (DE)

(56) Entgegenhaltungen:
- EP-A- 0 271 077
- EP-A- 0 573 793
- EP-A- 0 624 617
- WO-A-95/11269
- DE-A- 2 924 663

## Beschreibung

### Gebiet der Erfindung

Die Erfindung betrifft ein Verfahren zur Herstellung niedrigviskoser wasserlöslicher Polymerdispersionen enthaltend mindestens ein polymeres Dispergiermittel D) und ein Polymerisat A) bestehend aus a1) mindestens einem wasserlöslichen Monomeren, a2) mindestens einem vernetzenden Monomeren mit mindestens zwei radikalisch polymerisierbaren Gruppen, sowie gegebenenfalls a3) mindestens einem hydrophoben Monomeren und gegebenenfalls a4) mindestens einem amphiphilen Monomeren.

### Stand der Technik

Wäßrige Dispersionen wasserlöslicher Polymerisate sind bekannt. Sie werden beispielsweise als Flockungsmittel bei der Abwasserbehandlung, als Entwässerungsmittel von Schlämmen, als Retentionsmittel bei der Papierherstellung, als Bodenverbesserungsmittel oder als Dispergiermittel eingesetzt.
EP 170 394 beschreibt eine mit Wasser mischbare Flüssigkeit bestehend aus Partikeln, aufgebaut aus einem hochmolekularen Polymergel, das Teilchengrößen von über 20 µm aufweist, in wäßriger Lösung. Die kontinuierliche Phase ist hierbei eine wäßrige Lösung, enthaltend ein "Äquilibrierungsmittel", das den Wassergehalt der Gelpartikel mit dem Wasseranteil in der kontinuierlichen Phase im Gleichgewicht hält und das somit eine Agglomeration der Gelpartikel verhindert. Als bevorzugte Äquilibrierungsmittel werden das Natriumsalz der Polyacrylsäure bzw. Polydiallyldimethylammoniumchlorid (Poly-DADMAC) verwendet.
In EP 183 466 wird ein Verfahren zur Herstellung einer wasserlöslichen Polymerdispersion beschrieben, gekennzeichnet durch Polymerisieren eines wasserlöslichen Monomeren unter Rühren in einer wäßrigen Lösung von wenigstens einem Salz in Gegenwart eines Dispergiermittels. Hierbei finden Polyole, Polyalkylenether, Alkalisalze der Polyacrylsäure und Alkalisalze der Poly-2-Acrylamido-2-methylpropansulfonsäure als Dispergiermittel Verwendung.
Die DE-PS 29 24 663 umfaßt ein Verfahren zur Herstellung einer wäßrigen Dispersion aus einer wasserlöslichen Polymermasse mit guter Stabilität und Fließfähigkeit, wobei das wasserlösliche Polymerisat wenigstens ein wasserlösliches, ethylenisch ungesättigtes Monomeres enthält und wobei als Dispergiermittel Polyalkylenether, Polyethylenimin oder andere Polymere anwesend sein können, gegebenenfalls in Gegenwart von anorganischen Salzen. Die solchermaßen hergestellte Dispersion kann, gegebenenfalls nach Verdünnen mit Wasser, als Flockunghilfsmittel, Verdickungsmittel, Bodenkonditionierungsmittel und für weitere Anwendungen eingesetzt werden.
In EP-A 262 945 wird eine homogene Mischung aus zwei wasserlöslichen Polymerisaten 1 und 2 beansprucht, wobei Polymerisat 1 durch Polymerisation entsprechender Monomerer in der wäßrigen Lösung von Polymerisat 2 hergestellt wird. Als Wirkstoffkonzentrationen, das heißt als Summe der Gehalte von Polymerisat 1 und 2, werden bezogen auf die wäßrige Lösung mindestens 10 Gew.-% genannt. Die Mengenverhältnisse von Polymerisat 1 zu Polymerisat 2 liegen zwischen 10 : 1 und 1 : 20.
Anwendungsgebiet solcher Polymerlösungen sind die Stabilisierung von suspendierten Tonteilchen gegen Anquellen sowie der Einsatz als Flockungsmittel und Retentionsmittel bei der Papierherstellung.
EP-A 573 793 umfaßt wäßrige Dispersionen wasserlöslicher Polymerisate gebildet durch Polymerisation eines Gemischs bestehend aus wasserlöslichen, hydrophoben und gegebenenfalls amphiphilen Monomeren in Gegenwart eines polymeren Dispergiermittels. Die deutschen Patentanmeldungen P 43 16 200.2, P 43 35 567.6 sowie P 44 01 951.3 beschreiben Verfahren zur Herstellung solcher Dispersionen von wasserlöslichen Polymerisaten.

### Aufgabe und Lösung

Bei der Herstellung der im Stand der Technik beschriebenen wäßrigen Dispersionen wasserlöslicher Polymerisate durch Polymerisation von hydrophilen Monomeren in wäßriger Phase werden Anteile an vernetzenden Monomeren vermieden, da solche Anteile bei hohen Polymerisatgehalten zur Bildung makroskopischer Gele mit extrem hohen Viskositäten führen. Solche vernetzenden Monomere sind andererseits in relativ moderaten Anteilen interessant für die Erzeugung hoher Molekulargewichte bei den wasserlöslichen Polymerisaten, womit beispielsweise hohe Flockungseffizienz oder eine gute Verdickungswirkung erzielt werden kann. Neben der Bereitstellung von wäßrigen Dispersionen wasserlöslicher Polymerisate, die einen bestimmten Anteil an vernetzenden Monomereinheiten enthalten, bestand weiterhin die Aufgabe, einen hohen Gehalt an Polymerisat-Wirkstoff in der wäßrigen Dispersion und gleichzeitig eine niedrige Viskosität der wäßrigen Dispersion zu erhalten. Darüber hinaus umfaßte die Aufgabe die Herstellung solcher wäßriger Dispersionen wasserlöslicher Polymerisate in Abwesenheit einer Ölphase und in Abwesenheit von Salzen, wie sie beispielsweise von EP-A 183 466 beschrieben werden, in der wäßrigen Phase, um den Anteil an ökologisch bedenklichen Substanzen in den Dispersionen möglichst niedrig zu halten.

Überraschenderweise wurde gefunden, daß die Aufgabenstellung hervorragend gelöst wird mit wäßrigen Dispersionen PD) wasserlöslicher Polymerisate A), sowie einem Verfahren zu deren Herstellung, die gebildet werden durch die Polymerisation der Monomerbestandteile:
a1) 50 bis 99,999 Gew.-%, im besonderen Fall 50 bis 98,999 Gew.-%, im ganz besonderen Fall 50 bis 98,899 Gew.-% mindestens eines wasserlöslichen Monomeren,
a2) 10⁻³ bis 1 Gew.-% vorzugsweise 10⁻² bis 0,5 Gew.-% mindestens eines vernetzenden Monomeren mit mindestens zwei ethylenisch ungesättigten, radikalisch polymerisierbaren Gruppen, sowie gegebenenfalls
a3) 0 bis 30 Gew.-%, im besonderen Fall 1 bis 20 Gew.-%, mindestens eines hydrophoben Monomeren, und
a4) 0 bis 20 Gew-%, im besonderen Fall 0,1 bis 15 Gew-% mindestens eines amphiphilen Monomeren
in wäßriger lösung in Gegenwart mindestens eines polymeren Dispergiermittels D) mit einem mittleren Molekulargewicht M_{w} (Gewichtsmittel) im Bereich
zwischen 10³ bis 4·10⁵ Dalton und funktionellen Gruppen ausgewählt aus Ether-, Hydroxyl-, Carboxyl-, Sulfon-, Sulfatester-, Amino-, Amido-, Imino-, tert.-Amino-, und/oder quaternären Ammoniumgruppen, welches sich signifikant in der chemischen Zusammensetzung und im
mittleren Molekulargewicht M_{w} (Gewichtsmittel) vom wasserlöslichen Polymerisat A) unterscheidet und mit diesem unverträglich ist und sich
die Monomerkomponenten a1), a2), a3) und a4) zu 100 Gew.-% ergänzen, die Menge des eingesetzten Monomerengemischs a1), a2) sowie gegebenenfalls a3) und a4) zwischen 5 und 80 Gewichtsteilen, die Menge des polymeren Dispergiermittels D zwischen 1 und 50 Gewichtsteilen liegt, jeweils bezogen auf 100 Gew.-Teile Wasser als Reaktionsmedium und das resultierende Polymerisat A) ein mittleres Molekulargewicht M_{w} von mindestens 5 x 10⁵ Dalton aufweist und beim Verdunnen der wäßrigen Polymerdispersion PD die aktuelle Viskositat auf ein sehr hohes Maximum ansteigt, wobei das System klar wird.

In bevorzugten Ausführungsformen der Erfindung weist mindestens eines der wasserlöslichen Monomeren a1) mindestens eine ionische Gruppe auf,
ist das vernetzende Monomere a2) ausgewählt aus der Gruppe der Di(meth)acrylverbindungen, Tri(meth)acrylverbindungen, Tetra(meth)acrylverbindungen, sowie (Meth)allyl(meth)-acrylverbindungen,
ist das hydrophobe Monomere a3) eine Verbindung der Formel I: 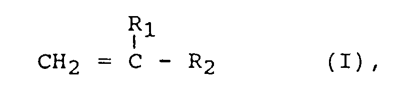 wobei
- R₁: für Wasserstoff oder Alkyl mit 1 bis 5 Kohlenstoffatomen, sowie
- R₂: für Alkyl, Cycloalkyl, Aryl oder Aralkyl mit 1 bis 20 Kohlenstoffatomen oder für 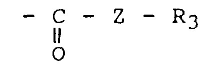 mit R₃ für Alkyl, Cycloalkyl, Aryl, oder Aralkyl mit 1 bis 20 Kohlenstoffatomen und Z für 0, NH oder NR₃
stehen können,
und ist das amphiphile Monomere a4) eine Verbindung der Formel II: 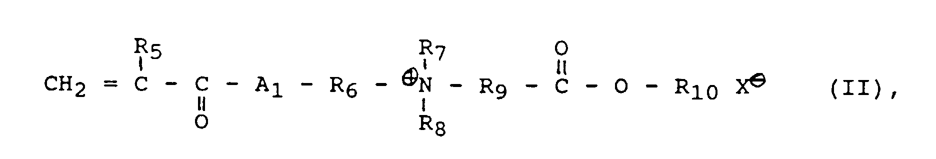 wobei
- A₁: für O, NH, NR₄ mit R₄ für Alkyl mit 1 bis 4 Kohlenstoffatomen,
- R₅: für Wasserstoff oder Methyl,
- R₆: für Alkylen mit 1 bis 18 Kohlenstoffatomen,
- R₇ und R₈: unabhängig voneinander für Alkyl mit 1 bis 6 Kohlenstoffatomen,
- R₉: für Alkylen mit 1 bis 6 Kohlenstoffatomen,
- R₁₀: für Alkyl, Aryl oder Aralkyl mit 8 bis 32 Kohlenstoffatomen, sowie
- X: für Halogen, OCN, SCN, SO₄CH₃, Acetat
stehen können,
oder eine Verbindung der Formel III: 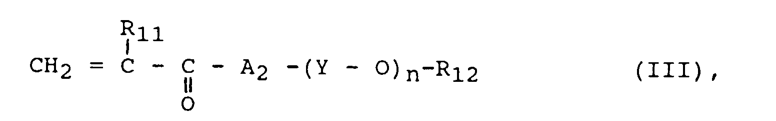 wobei
- A₂: für O, NH oder NR₁₃ mit R₁₃ für Alkyl mit 1 bis 4 Kohlenstoffatomen,
- R₁₁: für Wasserstoff oder Methyl,
- R₁₂: für Alkyl mit 8 bis 32 Kohlenstoffatomen,
- Y: für Alkylen mit 2 bis 6 Kohlenstoffatomen und
- n: für eine ganze Zahl zwischen 1 und 50
stehen können.

In einer weiteren bevorzugten Ausführungsform der Erfindung wird in einer ersten Stufe das Polymerisat A) in Gegenwart mindestens eines polymeren Dispergiermittels D), wie beschrieben, hergestellt und der resultierenden Polymerdispersion PD) danach in einer zweiten Stufe weiteres Dispergiermittel D) in wäßriger Lösung hinzugefügt (vgl. Auch DE-Patentanmeldung P 43 16 200.2). Es resultiert die Polymerdispersion PD'). Weiterhin können sich gemäß der deutschen Patentanmeldung P 43 35 567.6 der Herstellung der Polymerdispersion PD) oder der Polymerdispersion PD') in einer ersten Stufe die Reduktion des Wassergehalts zu einer aufkonzentrierten Polymerdispersion sowie in einer zweiten Stufe die Zugabe von weiterem Dispergiermittel D) in wäßriger Lösung anschließen. Es resultiert die Polymerdispersion PD").

### Durchführung der Erfindung

### Die Monomeren a1)

Als Monomere a1) können beispielsweise Salze aus der Acryl- und/oder der Methacrylsäure der allgemeinen Formel IV eingesetzt werden: 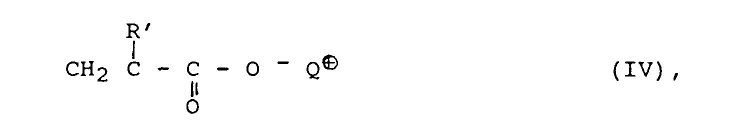 wobei
- R': für Wasserstoff oder Methyl und
- Q^{⊕}: für Alkalimetallionen, wie beispielsweise Na^{⊕} oder K^{⊕}, Ammoniumionen wie beispielsweise NH₄^{⊕} , ^{⊕} NR"H₃, ^{⊕}NR"₂H₂, ^{⊕} NR"₃H oder ^{⊕}NR"₄ mit R" = Alkyl mit 1 bis 6 Kohlenstoffatomen oder weitere einwertige, positiv geladene Ionen,
stehen können.

Zu Monomeren a1) der Formel IV gehören beispielsweise Natrium(meth)acrylat, Kalium(meth)acrylat oder Ammonium(meth)acrylat.
Desweiteren können als Monomerkomponente a1) beispielsweise die Acrylsäure und/oder die Methacrylsäure selbst sowie Methacrylamide der Formel V verwendet werden: 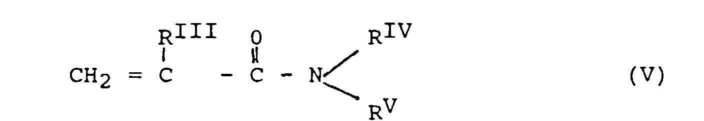 wobei
- R^{III}: für Wasserstoff oder Methyl, sowie
- R^{IV} und R^{V}: unabhängig voneinander für Wasserstoff und/oder für gegebenenfalls funktionalisierte Alkylreste mit 1 bis 5 Kohlenstoffatomen
stehen können.

Als Monomere a1) der Formel V seien beispielhaft genannt: (Meth)acrylamid, N-Methyl(meth)acrylamid, N,N-Dimethyl(meth)acrylamid, N,N-Dimethyl(meth)acrylamid, N-Methyl-N-Ethyl(meth)acrylamid sowie N-(2-Hydroxy)ethyl-(meth)acrylamid.

Zur Herstellung der (Meth)acrylamide vgl. beispielsweise Kirk-Othmer, Encyclopedia of Chemical Technology, 3rd. Ed., Vol. 15, Seiten 346 bis 376, Wiley Interscience, New York, 1981.
Weiterhin können als Monomerkomponente a1) Monomere der Formel VI eingesetzt werden: 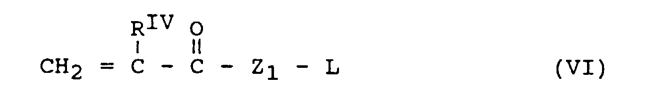 wobei
R^{IV} für Wasserstoff oder Methyl,
Z₁ für 0, NH oder NR₄, sowie
L für die Gruppen: 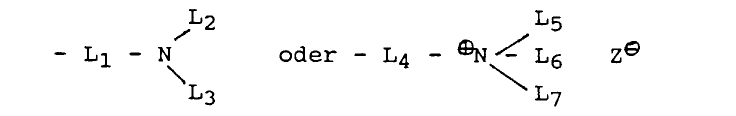 wobei L₁ und L₄ für einen Alkylenrest oder Hydroxyalkylenrest mit 2 bis 6 Kohlenstoffatomen, L₂, L₃, L₅, L₆ und
L₇ unabhängig voneinander für Wasserstoff oder einen Alkylrest mit 1 bis 6 Kohlenstoffatomen, sowie Z für Halogen, Acetat oder SO₄CH₃
stehen können.

Beispielhaft für Monomere a1) der Formel VI seien genannt: 2-(N,N-Dimethylamino)ethyl(meth)acrylat, 3-(N,N-Dimethylamino)propyl(meth)acrylat, 4-(N,N-Dimethylamino)butyl-(meth)acrylat, 2-(N,N-Diethylamino)ethyl(meth)acrylat, 2-Hydroxy-3-(N,N-dimethylamino)propyl(meth)acrylat, 2-(N,N,N-Trimethylammonium)ethyl(meth)acrylat-chlorid, (3-(N,N,N-Trimethylammonium)propyl(meth) acrylat-chlorid oder 2-Hydroxy-3-(N,N,N-trimethylammonium)propyl(meth) acrylat-chlorid bzw. die (Meth)acrylamide der o.g. Verbindungen, wie beispielsweise 2-Dimethylaminoethyl(meth)acrylamid, 3-Dimethylaminopropyl(meth)acrylamid oder 3-Trimethylammoniumpropyl(meth)acrylamid-chlorid. Zur Darstellung der (Meth)acrylammoniumsalze vgl. beispielsweise Kirk-Othmer, Encyclopedia of Chemical Technology, 3rd. Ed., Vol. 15, Seiten 346 bis 376, Wiley Interscience, New York, 1981. Als Monomerkomponente a1) können weiterhin ethylenisch ungesättigte Monomere, die zur Bildung von wasserlöslichen Polymeren befähigt sind, eingesetzt werden, wie beispielsweise Vinylpyridin, N-Vinylpyrrolidon, Styrolsulfonsäure oder N-Vinylimidazol. Darüber hinaus sind auch Kombinationen verschiedener, unter a1) angeführter wasserlöslicher Monomeren möglich.

### Die vernetzenden Monomeren a2)

Als vernetzende Monomere finden Verbindungen mit mindestens zwei polymerisierbaren Gruppen Verwendung. Für Verbindungen mit zwei radikalisch polymerisierbaren, ethylenisch ungesättigten Gruppen können stehen:
1) Alkenyldi(meth)acrylate wie beispielsweise 1,6-Hexandioldi(meth)acrylat, 1,10-Decandioldi-(meth)acrylat, 1,12-Dodecandioldi(meth)acrylat, 1,18-Octadecandioldi(meth)acrylat, Neopentylglycoldi(meth)acrylat, Methylendi(meth)acrylat, 2,2'-Bis (hydroxymethyl)-1,3-propandioldi(meth)-acrylat, sowie vorzugsweise Glycoldi(meth)-acrylat, 1,3-Propandioldi(meth)acrylat, 1,3-Butandioldi(meth)acrylat und 1,4-Butandioldi-(meth)acrylat.
2) Alkenyldi(meth)acrylamide wie beispielsweise N-Methyldi(meth)acrylamid, N,N'-3-Methylbutylidenbis(meth)acrylamid, N,N'-(1,2-Di-hydroxyethylen)bis(meth)acrylamid, sowie vorzugsweise N,N'-Hexamethylenbis(meth) acryl-amid und besonders bevorzugt N,N'-Methylenbis-(meth)acrylamid.
3) Polyalkoxydi(meth)acrylate der Formel VII: 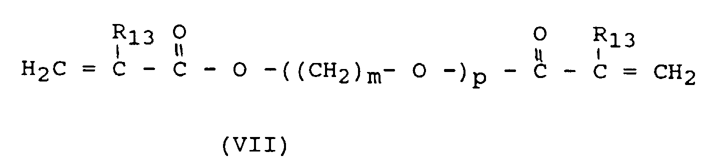 wobei
   - R₁₃: für Wasserstoff oder Methyl,
   - m: für eine ganze Zahl zwischen 2 und 6, sowie
   - p: für eine ganze Zahl zwischen 2 und 50
   stehen können.
Beispielhaft seien genannt:
   Polypropylenglycoldi(meth)acrylate (m = 3) mit p zwischen 4 und 25, Polybutylenglycoldi(meth)-acrylat (m = 4) mit p zwischen 5 und 40, sowie die bevorzugt eingesetzten Polyethylenglycoldi-(meth)acrylate (m = 2) mit p zwischen 2 und 45, wie beispielsweise Diethylenglycoldi(meth)-acrylat, Triethylenglycoldi(meth)acrylat, Tetraethylenglycoldi(meth)acrylat oder vorzugsweise Polyethylenglycoldi(meth)acrylate mit p zwischen 5 und 20.
4. Als Di(meth)acrylate können beispielsweise weiterhin verwendet werden: Benzylidindi(meth)acrylat, Bisphenol-A-di(meth)-acrylat, 1,3-Di(meth)acryloyloxy-propanol-2, Hydrochinondi(meth)acrylat, Thioethylenglycoldi(meth)acrylat, Thiopropylenglycoldi(meth)-acrylat, Thiopolyethylenglycoldi(meth)acrylate sowie Thiopropylenglycoldi(meth)acrylate.
5. Divinylverbindungen wie beispielsweise 1,4-Butandioldivinylether oder Divinylbenzol, Butadien oder 1,6-Hexadien, Di(meth)allylverbindungen wie beispielsweise Di(meth)allylphthalat oder Di(meth)allylsuccinat, Vinyl-(meth)acryl-Verbindungen wie beispielsweise Vinyl(meth)acrylat oder bevorzugt (Meth)allyl-(meth)acryl-Verbindungen wie beispielsweise Allyl(meth)acrylat.

Für Verbindungen mit 3 oder mehr ethylenisch ungesättigten, radikalisch polymerisierbaren Gruppen seien beispielhaft genannt: Glycerintri(meth)acrylat, Trimethylolpropantri(meth)acrylat, Trimethylolpropantriethoxytri(meth)acrylat, Trimethacrylamid, (Meth)allylidendi(meth)acrylat, 3-Allyloxy-1,2-propandioldi(meth)acrylat, Triallylcyanurat oder Triallylisoals Vertreter für Verbindungen mit mehr als 3 ethylenisch ungesättigten, radikalisch polymerisierbaren Gruppen: Pentaerythrittetra(meth)acrylat oder N,N,N',N'-Tetra(meth)acryloyl-1,5-pentandiamin.

### Die hydrophoben Monomeren a3)

Hydrophobe Monomere sind bevorzugt Monomere der Formel I: 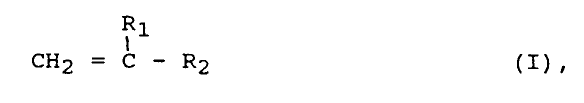 wobei
- R₁: für Wasserstoff oder Alkyl mit 1 bis 5 Kohlenstoffatomen und
- R₂: für Alkyl, Cycloalkyl, Aryl oder Aralkyl mit 1 bis 20 Kohlenstoffatomen oder für 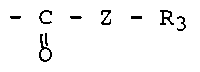 mit Z für O, NH oder NR₃ sowie R₃ für Alkyl, Cycloalkyl, Aryl oder Aralkyl mit 1 bis 20 Kohlenstoffatomen oder für Aryl mit 6 bis 12 Kohlenstoffatomen
stehen können.

Beispielhaft für Monomere der Formel I seien genannt: Styrol, α-Methylstyrol, p-Methylstyrol, p-Vinyltoluol, Vinylcyclopentan, Vinylcyclohexan, Vinylcyclooctan, Propylen, Buten-1, Isobuten, 2-Methylbuten-1, 2-Methylhexen-1, 2-Propylhexen-1, Methyl(meth)acrylat, Ethyl(meth)acrylat, Propyl(meth)acrylat, Isopropyl(meth)acrylat, Butyl(meth)acrylat, Pentyl(meth)acrylat, Hexyl(meth)acrylat, Octyl(meth)acrylat, Decyl(meth)acrylat, Dodecyl(meth)acrylat, Tetradecyl(meth)acrylat, Hexadecyl(meth)acrylat, Octadecyl(meth)acrylat, Eicosyl(meth)acrylat, Cyclopentyl(meth)acrylat, Cyclohexyl(meth)acrylat, Cyclooctyl(meth)acrylat, Phenyl(meth)acrylat, 4-Methylphenyl(meth)acrylat oder 4-Methoxyphenyl(meth)acrylat. Desweiteren können als hydrophobe Monomere a3) eingesetzt werden: Ethylen, Vinylidenchlorid, Vinylidenfluorid, Vinylchlorid oder weitere, überwiegend araliphatische Verbindungen mit polymerisierbaren Doppelbindungen. Dabei sind auch Kombinationen verschiedener hydrophober Monomerer a3) möglich.

### Die amphiphilen Monomeren a4)

Amphiphile Monomere a4) können beispielsweise monomere Verbindungen der Formel II sein: 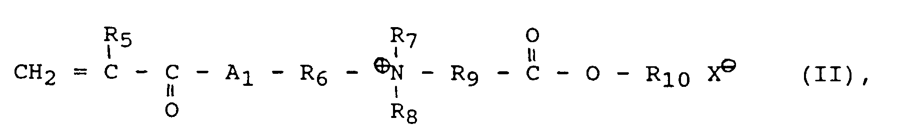 wobei
- A₁: für 0, NH, NR₄ mit R₄ für Alkyl mit 1 bis 4 Kohlenstoffatomen,
- R₅: für Wasserstoff oder Methyl,
- R₆: für Alkylen mit 1 bis 18 Kohlenstoffatomen,
- R₇ und R₈: unabhängig voneinander für Alkyl mit 1 bis 6 Kohlenstoffatomen,
- R₉: für Alkylen mit 1 bis 6 Kohlenstoffatomen,
- R₁₀: für Alkyl, Aryl oder Aralkyl mit 8 bis 32 Kohlenstoffatomen und
- X: für Halogen, OCN, SCN, SO₄CH₃ oder Acetat
stehen können.

Weiterhin umfassen die amphiphilen Monomeren a4) Verbindungen der Formel IIa. 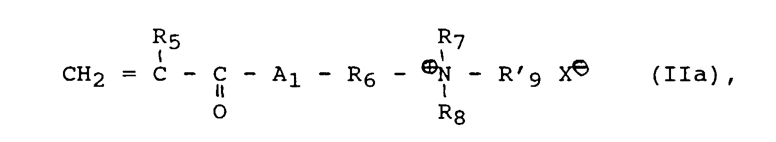 wobei A₁, R₅, R₆, R₇, R₈ und X dieselbe Bedeutung wie in Formel II besitzen, sowie R'₉ für Alkyl mit 1 bis 18 Kohlenstoffatomen stehen kann.

Beispielhaft für Monomere der Formel II und IIa seien genannt: 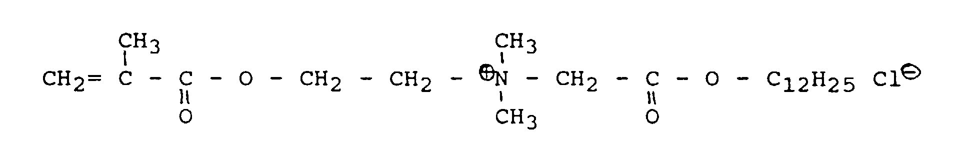 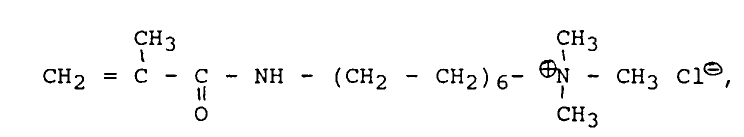 oder 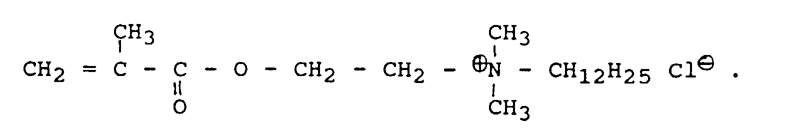 Zur Herstellung der amphiphilen Monomeren der Formeln II und IIa vgl. beispielsweise Kirk-Othmer, Encyclopedia of Chemical Technology, 3rd. Ed., Vol. 1, Seiten 330 bis 354, Vol. 15, Seiten 346 bis 376, 1978 und 1981, Wiley Interscience, New York.

Vorzugsweise werden amphiphile Monomere a4) der Formeln III und IIIa eingesetzt: 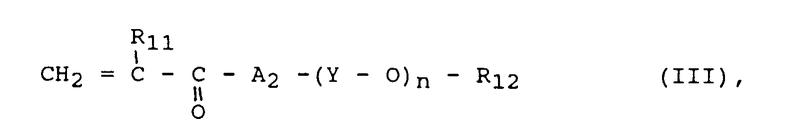 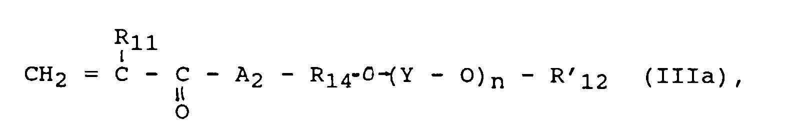 wobei
- A₂: für O, NH oder NR₁₃ mit R₁₃ für Alkyl mit 1 bis 4 Kohlenstoffatomen,
- R₁₁: für Wasserstoff oder Methyl,
- R₁₂: für Alkyl, Aryl oder Aralkyl mit 8 bis 32 Kohlenstoffatomen,
- R'₁₂: für Wasserstoff oder Alkyl mit 1 bis 4 Kohlenstoffatomen,
- R₁₄: für Alkylen mit 1 bis 18 Kohlenstoffatomen,
- Y: für Alkylen mit 2 bis 6 Kohlenstoffatomen, sowie
- n: für eine ganze Zahl zwischen 1 und 50
stehen können.
Beispielhaft für Monomere der Formeln III und IIIa seien genannt: 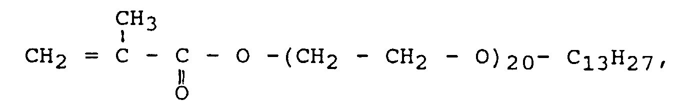 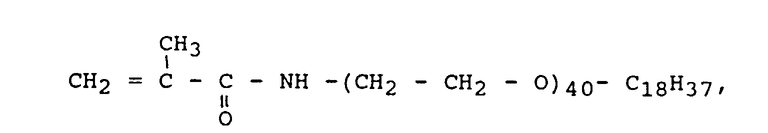 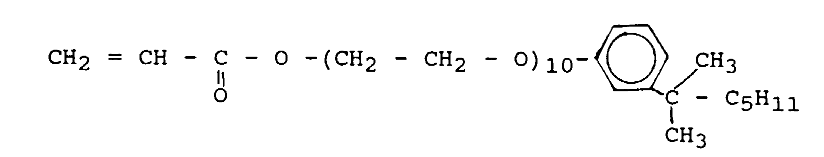 oder 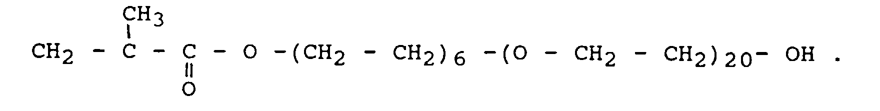 Dabei sind auch Kombinationen verschiedener amphiphiler Monomerer a4) möglich.

### Das polymere Dispergiermittel D)

Das polymere Dispergiermittel D) unterscheidet sich signifikant in der chemischen Zusammensetzung und im mittleren Molekulargewicht M_{w} (Gewichtsmittel) vom wasserlöslichen Polymerisat a) und ist mit diesem unverträglich. Die mittleren Molekulargewichte M_{w} der polymeren Dispergiermittel D) liegen im Bereich zwischen 10³ bis 5 x 10⁵ Dalton, vorzugsweise zwischen 10⁴ bis 4 x 10⁵ Dalton (zur Bestimmung von M_{w} vgl. H.F. Mark et al. Encyclopedia of Polymer Science and Technology, Vol. 10, Seiten 1 bis 19, J. Wiley, New York, 1987).
Die polymeren Dispergiermittel D) enthalten funktionelle Gruppen ausgewählt aus Ether-, Hydroxyl-, Carboxyl-, Sulfon-, Sulfatester-, Amino-, Amido-, Imino-, tert.-Aminound/oder quaternäre Ammoniumgruppen. Beispielhaft für polymere Dispergiermittel D) seien genannt: Cellulosederivate, Polyethylenglycol, Polypropylenglycol, Copolymerisate aus Ethylenglycol und Propylenglycol, Polyvinylacetat, Polyvinylalkohol, Stärke und Stärkederivate, Dextran, Polyvinylpyrrolidon, Polyvinylpyridin, Polyethylenimin, Polyvinylimidazol, Polyvinylsuccinimid, Polyvinyl-2-methylsuccinimid, Polyvinyl-1,3-oxazolidon-2, Polyvinyl-2-methylimidazolin, sowie Copolymerisate, die neben Kombinationen aus monomeren Bausteinen obenangeführter Polymerisate beispielsweise folgende Monomereinheiten enthalten können: Maleinsäure, Maleinsäureanhydrid, Fumarsäure, Itakonsäure, Itakonsäureanhydrid, (Meth)acrylsäure, Salze der (Meth)acrylsäure oder (Meth)acrylamide.
Bevorzugt werden als polymere Dispergiermittel D) Polyalkylenether wie beispielsweise Polyethylenglycol, Polypropylenglycol oder Polybutylen-1,4-ether eingesetzt (zur Herstellung von Polyalkylenethern vergleiche beispielsweise Kirk-Othmer, Encyclopedia of Chemical Technology, 3rd. Ed. Vol. 18, Seiten 616 bis 670, Wiley Interscience, New York, 1982).

Besonders bevorzugt werden als polymere Dispergiermittel D) Polyelektrolyte verwendet, wie beispielsweise Polymerisate, enthaltend Salze der (Meth)acrylsäure als anionische Monomerbausteine oder als kationische Bausteine mit Methylchlorid quaternierte Derivate von N,N-Dimethylaminoethyl(meth)acrylat, N,N-Dimethylaminopropyl-(meth)acrylat, N,N-Dimethylaminopropyl(meth)acrylamid oder N,N-Dimethylaminohydroxypropyl(meth) acrylat. Zur Herstellung von Polyelektrolyten vgl. beispielsweise Kirk-Othmer, Encyclopedia of Chemical Technology, 3rd. Ed., Vol. 18, Seiten 495 bis 530, Wiley Interscience, New York 1982.
Ganz besonders bevorzugt verwendet wird Polydiallyldimethylammonium-chlorid (Poly-DADMAC) mit einem mittleren Molekulargewicht M_{w} zwischen 5 x 10⁴ und 4 x 10⁵ Dalton als polymeres Dispergiermittel D) eingesetzt.

Desweiteren können niedermolekulare Emulgatoren mit einem Molekulargewicht M_{w} < 10³ Dalton in Mengen von 0 bis 5 Gew.-%, im besonderen Fall in Mengen von 0,1 bis 5 Gew.-% bezogen auf die gesamte Polymerdispersion eingesetzt werden.

Die Herstellung der wäßrigen Polymerdispersionen enthaltend Polymerisat A) und polymeres Dispergiermittel D)

### Das einstufige Herstellungsverfahren (Polymerdispersionen PD))

Die Menge des eingesetzten Monomerengemischs a1), a2) sowie gegebenenfalls a3) und a4) bezogen auf 100 Gew-Teile Wasser als Reaktionsmedium liegt zwischen 5 und 80 Gew.-Teilen, vorzugsweise zwischen 10 und 50 Gew.-Teilen. Werden die Monomeren a1) und gegebenenfalls a4) als wäßrige Lösung eingesetzt, so wird der Wasseranteil dem Reaktionsmedium zugeschlagen. Die Menge des polymeren Dispergiermittels D) bezogen auf 100 Gew.-Teile Wasser als Reaktionsmedium liegt zwischen 1 und 50 Gew.-Teilen, bevorzugt zwischen 2 und 40 Gew.-Teilen, besonders bevorzugt zwischen 5 und 30 Gew.-Teilen.
Im allgemeinen wird das polymere Dispergiermittel im wäßrigen Reaktionsmedium vorgelegt bevor die Monomeren a1), a2) sowie ggfs a3) und a4) hinzugefügt werden.

Zum Starten der Polymerisation werden beispielsweise radikalische Initiatoren (= Polymerisationsstarter) oder hochenergetische Strahlung, wie beispielsweise UV-Licht, verwendet. Als radikalische Initiatoren bevorzugt werden beispielsweise 2,2'-Azobisisobutyronitril, 2,2'-Azobis(2-amidopropan)dihydrochlorid gelöst in Dimethylformamid, Kaliumpersulfat, Ammoniumpersulfat, Wasserstoffperoxid, gegebenenfalls in Kombination mit einem Reduktionsmittel, wie beispielsweise einem Amin oder Natriumsulfit, eingesetzt. Der Anteil an Initiator, bezogen auf das Monomerengemisch a1), a2) sowie gegebenenfalls a3) und a4), liegt gewöhnlich zwischen 10⁻⁵ und 5 Gew.-%, vorzugsweise zwischen 10⁻⁴ und 1 Gew.-%, wobei der Initiator zu Beginn der Reaktion vollständig oder teilweise mit nachfolgender Dosierung über den gesamten Polymerisationsverlauf zugegeben werden kann.
Ebenso kann das Monomerengemisch a1), a2) sowie gegebenenfalls a3) und a4) vollständig am Anfang der Polymerisation oder teilweise als Zulauf über den gesamten Polymerisationsverlauf zugegeben werden. Die Polymerisationstemperatur beträgt zwischen 0 und 100 Grad C, bevorzugt zwischen 30 und 70 Grad C. Vorzugsweise wird unter Inertgas-Atmosphäre, beispielsweise unter Stickstoff-Atmosphäre polymerisiert. Der Endumsatz der Polymerisation liegt über 97 Gew.-% des Monomerengemischs a1), a2) sowie gegebenenfalls a3) und a4), wofür im allgemeinen 1 bis 8 Stunden Polymerisationsdauer erforderlich sind. Es resultieren Polymerdispersionen PD).

### Das zweistufige Herstellungsverfahren (Polymerdispersionen PD'))

Das zweistufige Herstellungsverfahren umfaßt die Zugabe von weiteren polymeren Dispergiermitteln D) in wäßriger Lösung zu der nach dem einstufigen Verfahren hergestellten Dispersion PD) des Polymerisats A). Es resultieren Polymerdispersionen PD').
Für den Mischvorgang können sowohl statische als auch dynamische Mischer verwendet werden. Während erstere durch Erzeugung von Turbulenz wirken, die in den Flüssigkeitsgemischen beim Durchströmen der Mischer entsteht, wird die Turbulenz bei dynamischen Mischern aktiv erzeugt (vgl. hierzu beispielsweise Römpps Chemielexikon, 9. Aufl., Seite 2805, Georg Thieme, Stuttgart, New York, 1992).
Bevorzugt werden als Mischer Rührer eingesetzt, die beim Rührvorgang ein geringes Schergefälle erzeugen, wie beispielsweise Propeller-, Schrägblatt-, Scheiben-, Impeller-, Kreuzbalken-, Gitter-, Anker-, Schraubenspindel- oder Wendelrührer (vgl. hierzu beispielsweise Römpps Chemielexikon, 9. Aufl., Seiten 3939 bis 3940, Georg Thieme, Stuttgart, New York, 1993).
Beim Mischvorgang wird vorzugsweise die nach dem einstufigen Verfahren hergestellte Polymerdispersion PD) vorgelegt und danach die wäßrige Lösung des polymeren Dispergiermittels D) unter Rühren schrittweise hinzugefügt. Dabei wird die Viskosität des Gemisches ständig kontrolliert.
In einer besonders bevorzugten Ausführungsform der Erfindung wird die Polymerdispersion PD) auf 30 bis 90 Grad C, vorzugsweise auf 40 bis 70 Grad C erwärmt, um die Viskosität während des Mischvorgangs möglichst niedrig zu halten.

### Das modifizierte zweistufige Herstellungsverfahren (Polymerdispersionen PD"))

Das modifizierte zweistufige Herstellungsverfahren umfaßt in der ersten Stufe die Reduktion des Wassergehalts der nach dem einstufigen Verfahren hergestellten Polymerdispersionen PD) bzw. des Wassergehalts der nach dem zuvor beschriebenen zweistufigen Verfahren hergestellten Polymerdispersionen PD') und danach in der zweiten Stufe die Zugabe von polymerem Dispergiermittel D) in wäßriger Lösung, wie beim zweistufigen Verfahren beschrieben. Es resultieren Polymerdispersionen PD").

Der Wassergehalt der Polymerdispersionen PD) bzw. PD') wird vorzugsweise durch Verdampfen des Wassers reduziert.

Dies kann beispielsweise durch Abdestillieren des Wassers erfolgen, vorzugsweise bei Unterdruck oder im Vakuum. Die hierbei verwendeten Destillationsapparate sind bekannt, wie beispielsweise Destillationskolonnen (vgl. beispielsweise Kirk-Othmer, Encyclopedia of Chemical Technology, 3rd. Ed., Vol. 7, Seiten 849 bis 891, Wiley Interscience, New York, 1979). Weitere Verdampfungsaggregate sind beispielsweise Konvektionsverdampfer oder Dünnschichtverdampfer (vgl. hierzu beispielsweise Kirk-Othmer, loc.cit., Vol. 9, Seiten 472 bis 493, Wiley Interscience, New York, 1980).
Auch Methoden wie Membrandiffusion oder das Binden von Wasser mit anorganischen oder organischen Reagenzien sind möglich.
Der Wassergehalt der Polymerdispersionen PD) bzw. PD') kann in dem Maße reduziert werden, wie die Viskosität der resultierenden Polymerdispersionen eine technologisch vernünftige Handhabung zuläßt und solange es die Dispersionsstabilität zuläßt. Im allgemeinen sind in der ersten Stufe Polymerdispersionen mit einem Wirkstoffgehalt von bis zu 50 Gew.-% bezogen auf die Dispersion oder leicht darüber möglich.
Die Zugabe des polymeren Dispergiermittels D) in der zweiten Stufe des modifizierten zweistufigen Herstellungsverfahrens erfolgt wie beim zweistufigen Herstellungsverfahren beschrieben. Wiederum wird die in Stufe 1 hergestellte Polymerdispersion mit reduziertem Wassergehalt vorzugsweise auf 30 bis 90 Grad C, besonders bevorzugt auf 40 bis 70 Grad C erwärmt, um die Viskosität beim Zumischen des polymeren Dispergiermittels möglichst niedrig zu halten. Es resultieren die Polymerdispersionen PD") mit sehr hohen Wirkstoffgehalten bei vergleichsweise sehr niedrigen Viskositäten.

### Vorteilhafte Wirkungen der Erfindung

Die die vernetzenden Monomereinheiten a2) enthaltenden Polymerdispersionen PD), PD') sowie PD") zeichnen sich, gemessen an der Wirkstoffkonzentration, durch eine überraschend niedrige Viskosität aus, wobei der Wirkstoff aus der Kombination von Polymerisat A) und polymeren Dispergiermittel D) besteht. Dies ist umso überraschender, da die Molekulargewichte des wasserlöslichen Polymerisats A) durch die vernetzenden Monomerkomponenten a2) bedingt deutlich höher als bei den Polymerisaten sind, die in den Polymerdispersionen des Standes der Technik anwesend sind.
Beim Verdünnen der wäßrigen Polymerdispersion PD), PD') sowie PD") steigt die aktuelle Viskosität auf ein sehr hohes Maximum, wobei das System klar wird. Hierbei wird die verdickende Wirkung des dispergierten Polymerisats A) deutlich.
Ein weiteres vorteilhaftes Merkmal der erfindungsgemäßen wäßrigen Polymerdispersionen ist die hohe Scher- und Standstabilität. So bleibt die hohe Viskosität einer wäßrigen Lösung mit 1 % Gehalt an Polymerisat A) auch nach längerem Rühren konstant.
Die Abwesenheit von organischen Lösungsmitteln gewährleistet eine sichere Handhabung (beispielsweise keine Entflammbarkeit) und eine ökologisch unbedenkliche Verwendung der erfindungsgemäßen Polymerdispersionen PD), PD') bzw. PD") als Verdickungsmittel, Flockungshilfsmittel für elektrisch geladene Schwebeteilchen, als Retentionsmittel für die Papierherstellung und/oder als Bodenverbesserungsmittel. In isolierter oder wasserarmer Form kann das erfindungsgemäße Polymerisatgemisch als Entwässerungsmittel, beispielsweise im Hygienebereich, verwendet werden. Das hohe Bindevermögen bei hoher Scherbeanspruchung macht die erfindungsgemäßen Polymerdispersionen zu idealen Bestandteilen von Tapetenbeschichtungen.

Die folgenden Beispiele sollen die Erfindung erläutern. Die physikalischen Daten wurden anhand der folgenden Normen bestimmt:
- Dynamische Viskosität η (mPa·s) nach DIN 53018/53019
- Molekulargewicht M_{w} per Gelpermeations-chromatographie (vgl. z.B. H.F. Mark et al., loc.cit., Vol. 10, Seiten 1 bis 19) mit Standard Poly-2-Trimethylammoniumethylacrylatchlorid.
- Stammbergewert STB II (s):
   Bestimmung des zeitlichen Verlaufs der Kaolinsedimentation bei Flockungsmittel-haltigen Lösungen nach dem Flockungsvorgang.
   Pro Liter Leitungswasser (20° DH) werden 20 g Kaolin suspendiert und unter Rühren homogen gehalten.
   Danach werden 250 ml Kaolinsuspension in einem 250 ml-Meßzylinder gefüllt und unter Rühren homogen gehalten. Zur Dosierung von 1 ml 0,1 %iger wäßriger Lösung der Polymerdispersion PD), PD') bzw. PD") wird das Rühren unterbrochen.
   Anschließend wird noch 15 s gerührt und hiernach das Rühren abgestellt. Danach wird die Zeit für das Absinken des Sedimentationsspiegels um 4 cm im Meßzylinder genommen, welche dem Stammbergewert STB II entspricht.

### BEISPIELE

### Beispiel 1

275,0 g einer 40 %igen wäßrigen Poly-DADMAC-Lösung, 67,5 g Acrylamid, 93,8 g einer 80 %igen wäßrigen 2-Trimethylammoniumethylacrylatchlorid-Lösung, 7,5 g Butylacrylat, 0,011 g Glycoldimethacrylat (1,1 g einer 1 %igen Lösung in DMF) und 555,1 g Wasser werden in einem Reaktionsgefäß mit N₂ entgast und unter Rühren auf 55 Grad C erwärmt. Anschließend werden 0,015 g 2,2'-Azobis[2-(2-imidazolin-2-yl)-propan] (AIP) gelöst in 0,135 g Wasser hinzugefügt. Nach 1,5 Stunden unter Rühren wird die Temperatur auf 65 Grad C erhöht und weitere 0,15 g AIP gelöst in 1,35 g Wasser zugegeben. Die Nachreaktion dauert 2 Stunden bei konstanter Temperatur von 65 Grad C.

Die resultierende Polymerdispersion PD1) ist durch folgende Größen gekennzeichnet: Die dynamische Viskosität der wäßrigen Polymerdispersion beträgt η₁ = 39400 mPa·s. Die dynamische Viskosität einer 1 %igen wäßrigen Lösung des hochmolekularen Polymerisats beträgt η₂ = 2040 mPa·s. Der Flockungswert beträgt: STB II = 13,1 s. Das Molekulargewicht des Polymerisats A1) beträgt M_{w} > 10⁶ Dalton.
Trockengehalt: 26%.

### Beispiel 2

275 g einer 40 %igen wäßrigen Poly-DADMAC-Lösung, 67,5 g Acrylamid, 93,8 g einer 80 %igen wäßrigen Trimethylammoniumethylacrylatchlorid-Lösung, 7,5 g Butylacrylat, 0,075 g Allylmethacrylat (0,75 g einer 10 %igen wäßrigen Lösung) und 555,45 g Wasser werden in einem Reaktionsgefäß mit N₂ entgast und unter Rühren auf 55 Grad C erwärmt. Anschließend werden 0,015 g 2,2'-Azobis[2-(2-imidazolin-2-yl)propan] (AIP) gelöst in 0,135 g Wasser hinzugefügt. Nach 1,5 Stunden unter Rühren wird die Temperatur auf 65 Grad C erhöht und weitere 0,15 g AIP gelöst in 1,35 g Wasser zugegeben. Die anschließende Nachreaktion dauert 1 Stunde bei konstanter Temperatur von 65 Grad C

Die resultierende Polymerdispersion PD2) ist durch folgende Größen gekennzeichnet:
Die dynamische Viskosität der wäßrigen Polymerdispersion beträgt η₁ = 29100 mPa·s.
Die dynamische Viskosität einer 1 %igen wäßrigen Lösung des hochmolekularen Polymerisats beträgt η₂ = 2450 mPa·s. Der Flockungswert beträgt: STB II = 11,1 s.
Das Molekulargewicht des Polymerisats beträgt M_{w} > 10⁶ Dalton.
Trockengehalt: 26 %.

### Beispiel 3:

275,0 g einer 40 %igen wäßrigen Poly-DADMAC-Lösung, 67,5 g Acrylamid, 93,8 g einer 80 %igen wäßrigen 2-Trimethylammoniumethylacrylatchlorid-Lösung, 7,5 g Butylacrylat, 0,0075 g N,N'-Methylenbisacrylamid (0,75 g einer 1 %igen wäßrigen Lösung) und 555,45 g Wasser werden in einem Raktionsgefäß mit N₂ entgast und unter Rühren auf 55 Grad C erwärmt.

Anschließend werden 0,015 g 2,2'-Azobis[2-(2-imidazolin-2-yl)propan) (AIP) gelöst in 0,135 g Wasser hinzugefügt. Nach 1,5 Stunden unter Rühren wird die Temperatur auf 65 Grad C erhöht und weitere 0,15 g AIP gelöst in 1,35 g Wasser zugegeben. Die anschließende Nachreaktion dauert 1 Stunde bei konstanter Temperatur von 65 Grad C.

Die resultierende Polymerdispersion PD3) ist durch folgende Größen gekennzeichnet:
Die dynamische Viskosität der wäßrigen Polymerdispersion beträgt η₁ = 55600 mPa·s.
Die dynamische Viskosität einer 1 %igen wäßrigen Lösung des hochmolekularen Polymerisats beträgt n₂ = 2910 mPa·s. Der Flockungswert beträgt: STB II = 18,5 s.
Das Molekulargewicht des Polymerisats beträgt M_{w} > 10⁶ Dalton.
Trockengehalt: 26 %.

### Beispiel 4

275,0 g einer 40 %igen wäßrigen Poly-DADMAC-Lösung, 67,5 g Acrylamid, 93,8 g einer 80 %igen wäßrigen 2-Trimethylammoniumethylacrylatchlorid-Lösung, 7,5 g Laurylacrylat, 0,0075 g N,N'-Methylenbismethacrylamid (0,75 g einer 1 %igen wäßrigen Lösung) und 555,45 g Wasser werden in einem Reaktionsgefäß mit N₂ entgast und unter Rühren auf 55 Grad C erwärmt.
Anschließend werden 0,015 g 2,2'-Azobis[2-(2-imidazolin-2-yol)propan] (AIP) gelöst in 0,135 g Wasser hinzugefügt. Nach 1,5 Stunden unter Rühren wird die Temperatur auf 65 Grad C erhöht und weitere 0,15 g AIP gelöst in 1,35 g Wasser zugegeben. Die anschließende Nachreaktion dauert 1 Stunde bei konstanter Temperatur von 65 Grad C.

Die resultierende Polymerdispersion PD4) ist durch folgende Größen gekennzeichnet:
Die dynamische Viskosität der wäßrigen Polymerdispersion beträgt η₁ = 45400 mPa·s.
Die dynamische Viskosität einer 1 %igen wäßrigen Lösung des hochmolekularen Polymerisats beträgt n₂ = 2700 mPa·s. Der Flockungswert beträgt. STB II = 9,3 s.
Das Molekulargewicht des Polymerisats beträgt M_{w} > 10⁶ Dalton.
Trockengehalt: 26 %.

### Beispiel 5

342,5 g einer 40 %igen wäßrigen Poly-DADMAC-Lösung, 97 g Acrylamid, 125 g einer 80 %igen wäßrigen 2-Trimethylammoniumethylacrylatchlorid-Lösung, 3 g Butylacrylat, 0,1 g Allylmethacrylat (1 g einer 10 %igen wäßrigen Lösung) und 431,5 g Wasser werden in einem Reaktionsgefäß mit N₂ entgast und unter Rühren auf 55 Grad C erwärmt.
Anschließend werden 0,02 g 2,2'-Azobis[2-(2-imidazolin-2-yl)propan] (AIP) gelöst in 0,18 g Wasser hinzugefügt. Nach 1,5 Stunden unter Rühren wird die Temperatur auf 65 Grad C erhöht und weitere 0,2 g AIP gelöst in 1,8 g Wasser zugegeben. Die anschließende Nachreaktion dauert 2 Stunden bei konstanter Temperatur von 65 Grad C. Nach Beendigung der Reaktion wird der Ansatz mit 333,3 g einer 40 %igen wäßrigen Poly-DADMAC-Lösung verdünnt.

Die resultierende Polymerdispersion PD'1) ist durch folgende Größen gekennzeichnet:
Die dynamische Viskosität der wäßrigen Polymerdispersion beträgt η₁ = 17500 mPa·s.

Die dynamische Viskosität einer 1 %igen wäßrigen Lösung des hochmolekularen Polymerisats beträgt η₂ = 1640 mPa·s. Der Flockungswert beträgt: STB II = 11,3 s.
Das Molekulargewicht des Polymerisats beträgt M_{w} > 10⁶ Dalton.
Trockengehalt: 35,3 %.

## Patentansprüche

1. Verfahren zur Herstellung von wäßrigen Dispersionen PD wasserlöslicher Polymerisate A, gebildet durch die Polymerisation der Monomerbestandteile
a1) 50 bis 99,999 Gew.-% mindestens eines wasserlöslichen Monomeren,
a2) 0,001 bis 1 Gew.-% mindestens eines vernetzenden Monomeren mit mindestens zwei ethylenisch ungesättigten, radikalisch polymerisierbaren Gruppen, sowie gegebenenfalls
a3) 0 bis 30 Gew.-% mindestens eines hydrophoben Monomeren und
a4) 0 bis 20 Gew.-% mindestens eines amphiphilen Monomeren
in wäßriger Lösung in Gegenwart mindestens eines polymeren Dispergiermittels D) mit einem mittleren Molekulargewicht M_{w} (Gewichtsmittel) im Bereich zwischen 10³ bis 4·10⁵ Dalton und funktionellen Gruppen ausgewählt aus Ether-, Hydroxyl-, Carboxyl-, Sulfon-, Sulfatester-, Amino-, Amido-, Imino-, tert.-Amino-, und/oder quaternären Ammoniumgruppen, welches sich signifikant in der chemischen Zusammensetzung und im mittleren Molekulargewicht M_{w} (Gewichtsmittel) vom wasserlöslichen Polymerisat A) unterscheidet und mit diesem unverträglich ist und sich die Monomerkomponenten a1), a2), a3) und a4) zu 100 Gew.-% ergänzen, die Menge des eingesetzten Monomerengemischs a1), a2) sowie gegebenenfalls a3) und a4) zwischen 5 und 80 Gewichtsteilen, die Menge des polymeren Dispergiermittels D zwischen 1 und 50 Gewichtsteilen liegt, jeweils bezogen auf 100 Gew.-Teile Wasser als Reaktionsmedium und das resultierende Polymerisat A) ein mittleres Molekulargewicht M_{w} von mindestens 5 x 10⁵ Dalton aufweist und beim Verdunnen der wäßrigen Polymerdispersion PD die aktuelle Viskositat auf ein sehr hohes Maximum ansteigt, wobei das System klar wird.

2. Verfahren gemäß Anspruch 1, dadurch gekennzeichnet, daß mindestens eines der wasserlöslichen Monomeren a1) eine ionische Gruppe aufweist.

3. Verfahren gemäß den Ansprüchen 1 und 2, dadurch gekennzeichnet, daß das vernetzende Monomere a2) ausgewählt ist aus der Gruppe der Di(meth)-acrylverbindungen, der Tri(meth)acrylverbindungen, der Tetra(meth)acrylverbindungen und/oder der (Meth)allyl(meth)acrylverbindungen.

4. Verfahren gemäß den Ansprüchen 1 bis 3, dadurch gekennzeichnet, daß die Monomerkomponente a3) zu 1 bis 25 Gew.-% an der Bildung des Polymerisats A) beteiligt ist.

5. Verfahren gemäß den Ansprüchen 1 bis 4, dadurch gekennzeichnet, daß die Monomerkomponente a4) zu 0,1 bis 15 Gew-% an der Bildung des Polymerisats beteiligt ist.

6. Verfahren gemäß den Ansprüchen 1 bis 5, dadurch gekennzeichnet, daß das hydrophobe Monomere a3) eine Verbindung der Formel I ist: 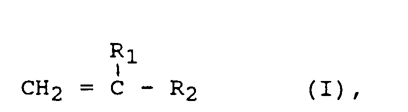 wobei
R₁ für Wasserstoff oder Alkyl mit 1 bis 5 Kohlenstoffatomen, sowie
R₂ für Alkyl, Cycloalkyl, Aryl oder Aralkyl mit 1 bis 20 Kohlenstoffatomen oder für 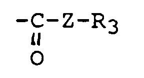 mit R₃ für Alkyl, Cycloalkyl, Aryl oder Aralkyl mit 1 bis 20 Kohlenstoffatomen und Z für O, NH oder NR₃
stehen können.

7. Verfahren gemäß den Ansprüchen 1 bis 6, dadurch gekennzeichnet, daß das amphiphile Monomere a4) eine Verbindung der Formeln II oder IIa ist 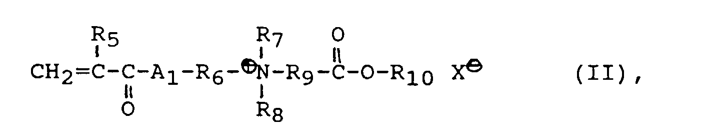 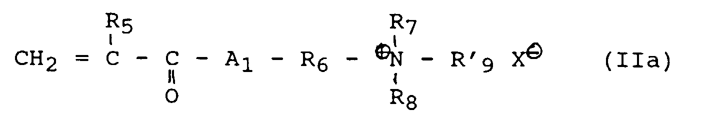 wobei
A₁ für O, NH, NR₄ mit R₄ für Alkyl mit 1 bis 4 Kohlenstoffatomen,
R₅ für Wasserstoff oder Methyl,
R₆ für Alkylen mit 1 bis 18 Kohlenstoffatomen,
R₇ und R₈ unabhängig voneinander für Alkyl mit 1 bis 6 Kohlenstoffatomen
R₉ für Alkylen mit 1 bis 6 Kohlenstoffatomen,
R'₉ für Alkyl mit 1 bis 18 Kohlenstoffatomen,
R₁₀ für Alkyl, Aryl oder Aralkyl mit 8 bis 32 Kohlenstoffatomen, sowie
X für Halogen, OCN, SCN, SO₄CH₃ oder Acetat
stehen können.

8. Verfahren gemäß den Ansprüchen 1 bis 6, dadurch gekennzeichnet, daß das amphiphile Monomere a4) eine Verbindung der Formeln III und IIIa ist. 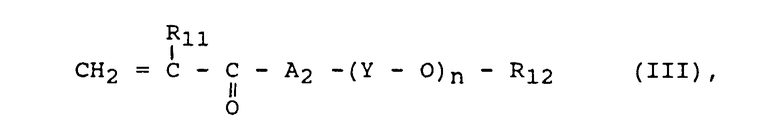 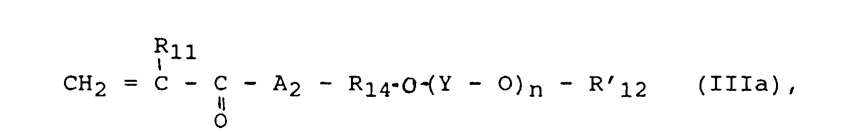 wobei
A₂ für O, NH, NR₁₃ mit R₁₃ für Alkyl mit 1 bis 4 Kohlenstoffatomen,
R₁₁ für Wasserstoff oder Methyl
R₁₂ für Alkyl, Aryl oder Aralkyl mit 8 bis 32 Kohlenstoffatomen,
R'₁₂ für Wasserstoff oder Alkyl mit 1 bis 4 Kohlenstoffatomen,
R₁₄ für Alkylen mit 1 bis 18 Kohlenstoffatomen
Y für Alkylen mit 2 bis 6 Kohlenstoffatomen sowie
n für eine ganze Zahl zwischen 1 und 50
stehen können.

9. Verfahren gemäß den Ansprüchen 1 bis 8, dadurch gekennzeichnet, daß das polymere Dispergiermittel D) ein Polyelektrolyt mit einem mittleren Molekulargewicht M_{w} von weniger als 5 x 10⁵ Dalton ist.

10. Verfahren gemäß den Ansprüchen 1 bis 9, dadurch gekennzeichnet, daß sich an die Herstellung des Polymerisats A) in Gegenwart des polymeren Dispergiermittels D) in der ersten Stufe eine zweite Stufe anschließt, in der der wasserlöslichen Polymerdispersion PD) weiteres polymeres Dispergiermittel D) in wäßriger Lösung hinzugefügt wird.

11. Verfahren gemäß Anspruch 10, dadurch gekennzeichnet, daß während der ersten Stufe der Herstellung des Polymerisats A) in Gegenwart des polymeren Dispergiermittels D) und/oder zwischen der ersten und zweiten Stufe des Verfahren gemäß Anspruch 10 der Wassergehalt der Polymerisation PD) reduziert wird.

12. Verwendung der mittels der Verfahren gemäß den Ansprüchen 1 bis 11 hergestellten Polymerdispersionen als Flockungsmittel für elektrisch geladene Schwebeteilchen, als Retentionsmittel für die Papierherstellung, als Verdickungsmittel, als Bestandteil von Papier- oder Tapetenbeschichtungen, als Entwässerungsmittel und/oder als Bodenverbesserungsmittel.

## Claims

1. Process for preparing aqueous dispersions PD of water-soluble polymers A, formed by the polymerisation of the monomer constituents
a1) 50 to 99.999 wt.-% of at least one water-soluble monomer,
a2) 0.001 to 1 wt.-% of at least one cross-linking monomer with at least two ethylenically unsaturated, radically polymerisable groups, and optionally
a3) 0 to 30 wt.-% of at least one hydrophobic monomer and
a4) 0 to 20 wt.-% of at least one amphiphilic monomer
in aqueous solution in the presence of at least one polymeric dispersant D) with an average molecular weight M_{w} (mean weight) within the range from 10³ to 4.10⁵ Daltons and functional groups selected from ether, hydroxyl, carboxyl, sulphone, sulphate ester, amino, amido, imino, tert.-amino and/or quaternary ammonium groups, which differs significantly in its chemical composition and in its average molecular weight M_{w} (mean weight) from the water-soluble polymer A) and is incompatible therewith and
the monomer components a1), a2), a3) and a4) add up to 100 wt.-%, the quantity of the monomer mixture of a1), a2) and optionally a3) and a4) used is between 5 and 80 parts by weight, the quantity of the polymeric dispersant D is between 1 and 50 parts by weight, in each case based on 100 parts by weight of water as the reaction medium and the resulting polymer A) has an average molecular weight M_{w} of at least 5 x 10⁵ Daltons and when the aqueous polymer dispersion PD is diluted the actual viscosity rises to a very high maximum, whereupon the system becomes clear.

2. Process according to claim 1, characterised in that at least one of the water-soluble monomers a1) contains an ionic group.

3. Process according to claims 1 and 2, characterised in that the cross-linking monomer a2) is selected from the group comprising the di(meth)acrylic compounds, the tri(meth)acrylic compounds, the tetra(meth)acrylic compounds and/or the (meth)allyl(meth)acrylic compounds.

4. Process according to claims 1 to 3, characterised in that the 1 to 25 wt.-% of the monomer component a3) is involved in forming the polymer A).

5. Process according to claims 1 to 4, characterised in that 0.1 to 15 wt.-% of the monomer component a4) is involved in forming the polymer.

6. Process according to claims 1 to 5, characterised in that the hydrophobic monomer a3) is a compound of formula I: 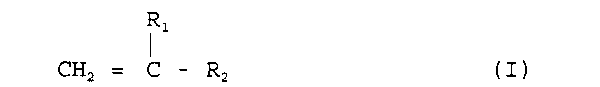 wherein
R₁ denotes hydrogen or alkyl having 1 to 5 carbon atoms, and
R₂ denotes alkyl, cycloalkyl, aryl or aralkyl having 1 to 20 carbon atoms or it may denote 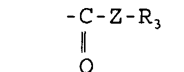 wherein R₃ denotes alkyl, cycloalkyl, aryl or aralkyl having 1 to 20 carbon atoms and Z may denote O, NH or NR₃

7. Process according to claims 1 to 6, characterised in that the amphiphilic monomer a4) is a compound of formulae II or IIa 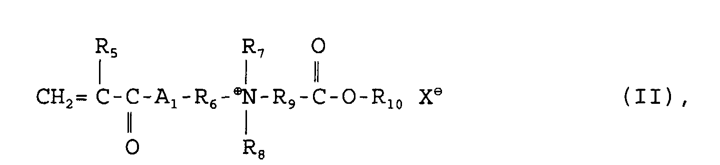 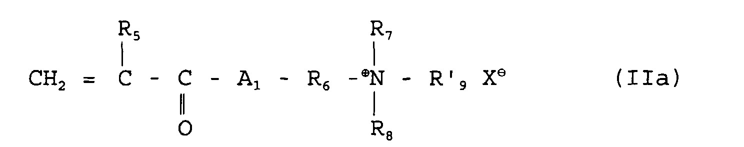 wherein
A₁ may denote O, NH, NR₄ where R₄ is alkyl having 1 to 4 carbon atoms,
R₅ denotes hydrogen or methyl,
R₆ denotes alkylene having 1 to 18 carbon atoms,
R₇ and R₈ independently of one another denote alkyl having 1 to 6 carbon atoms
R₉ denotes alkylene having 1 to 6 carbon atoms,
R'₉ denotes alkyl having 1 to 18 carbon atoms,
R₁₀ denotes alkyl, aryl or aralkyl having 8 to 32 carbon atoms, and
X denotes halogen, OCN, SCN, SO₄CH₃ or acetate.

8. Process according to claims 1 to 6, characterised in that the amphiphilic monomer a4) is a compound of formulae III and IIIa 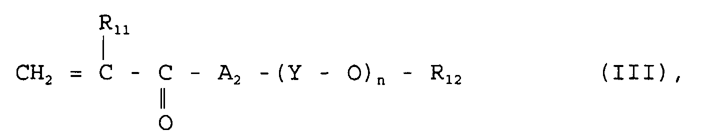 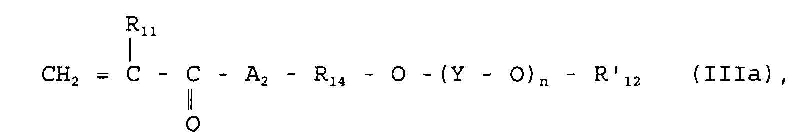 wherein
A₂ may denote O, NH, NR₁₃ where R₁₃ denotes alkyl having 1 to 4 carbon atoms,
R₁₁ denotes hydrogen or methyl
R₁₂ denotes alkyl, aryl or aralkyl having 8 to 32 carbon atoms,
R'₁₂ denotes hydrogen or alkyl having 1 to 4 carbon atoms,
R₁₄ denotes alkylene having 1 to 18 carbon atoms
Y denotes alkylene having 2 to 6 carbon atoms
n denotes an integer between 1 and 50.

9. Process according to claims 1 to 8, characterised in that the polymeric dispersant D) is a polyelectrolyte having an average molecular weight M_{w} of less than 5 x 10⁵ Daltons.

10. Process according to claims 1 to 9, characterised in that, following the preparation of the polymer A) in the presence of the polymeric dispersant D) in the first step there is a second step in which further polymeric dispersant D) in aqueous solution is added to the water-soluble polymer dispersion PD).

11. Process according to claim 10, characterised in that during the first step of the preparation of the polymer A) in the presence of the polymeric dispersant D) and/or between the first and second steps of the process according to claim 10 the water content of the polymerisation PD) is reduced.

12. Use of the polymer dispersions prepared by the processes according to claims 1 to 11 as flocculating agents for electrically charged suspended particles, as retention means for paper manufacture, as thickeners, as components of paper or wallpaper coverings, as dewatering agents and/or as soil improvers.

## Revendications

1. Procédé de production de dispersions aqueuses PD) de polymères A) solubles dans l'eau formés par la polymérisation des constituants monomères
a1) 50 à 99,999 % en poids d'au moins un monomère soluble dans l'eau,
a2) de 0,001 à 1 % en poids d'au moins un monomère réticulant comportant au moins deux groupes éthyléniquement insaturés polymérisables par voie radicalaire, ainsi que le cas échéant,
a3) de 0 à 30 % en poids d'au moins un monomère hydrophobe, et
a4) de 0 à 20 % en poids d'au moins un monomère amphiphile, en solution aqueuse en présence d'au moins un dispersant polymère D) ayant un poids moléculaire moyen Mw (moyenne en poids) compris entre 10³ et 4 x 10⁵ daltons et des groupes fonctionnels choisis parmi les groupes éther, hydroxyle, carboxyle, sulfone, ester de sulfate, amino, amido, imino, amino tertiaire et/ou ammonium quaternaire, qui est significatif dans la composition chimique et qui dans le poids moléculaire moyen Mw (moyenne en poids) se différencie du polymère soluble dans l'eau A) et est incompatible avec lui, et qui complètent les composants monomères a1), a2), a3) et a4) à 100 % en poids, la quantité du mélange monomère a1), a2) ainsi que le cas échéant a3) et a4) utilisée se situant entre 5 et 80 parties en poids, la quantité de dispersant polymère D) se situant entre 1 et 50 parties en poids, toujours par rapport à 100 parties en poids d'eau comme milieu réactionnel, et le polymère A) résultant présentant un poids moléculaire moyen M_{w} d'au moins 5 x 10⁵ daltons, et lors de la dilution de la dispersion aqueuse PD) la viscosité effective montant à un maximum très élevé, le système devenant clair.

2. Procédé selon la revendication 1,
caractérisé en ce qu'
au moins un des monomères solubles dans l'eau a1) est un groupe ionique.

3. Procédé selon les revendications 1 et 2,
caractérisé en ce que
le monomère réticulant est choisi dans le groupe des composés di(méth)acryliques, des composés tri(méth)acryliques, des composés tétra(méth)acryliques et/ou des composés (méth)allyl(méth)acryliques.

4. Procédé selon les revendications 1 à 3,
caractérisé en ce que
le composant monomère a3) participe à raison de 1 à 25 % en poids à la formation du polymère A).

5. Procédé selon les revendications 1 à 4,
caractérisé en ce que
le composant monomère a4) participe à raison de 0,1 à 15 % en poids à la formation du polymère.

6. Procédé selon les revendications 1 à 5,
caractérisé en ce que
le monomère hydrophobe a3) est un composé de formule I: 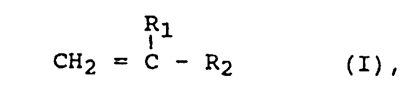 dans laquelle
R₁ représente un hydrogène ou un alkyle ayant de 1 à 5 atomes de carbone et,
R₂ représente un alkyle, cycloalkyle, aryle ou aralkyle ayant 1 à 20 atomes de carbone ou 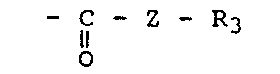 avec R₃ représentant un alkyle, cycloalkyle, aryle ou aralkyle ayant 1 à 20 atomes de carbone et Z représentant 0, NH ou NR₃.

7. Procédé selon les revendications 1 à 6,
caractérisé en ce que
le monomère amphiphile a4) est un composé de formule II ou IIa : 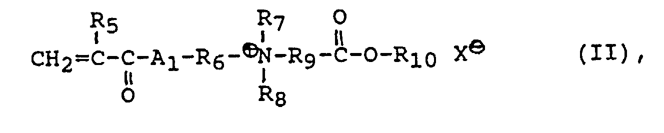 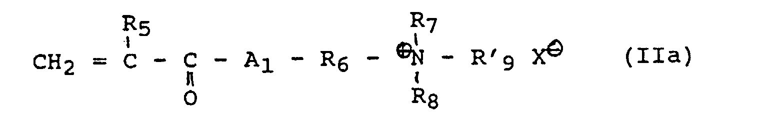 dans lesquelles
A₁ représente O, NH, NR₄ avec R₄ représentant un alkyle ayant de 1 à 4 atomes de carbone,
R₅ représente un hydrogène ou un méthyle,
R₆ représente un alkylène ayant de 1 à 18 atomes de carbone,
R₇ et R₈ représentent indépendamment l'un de l'autre un alkyle ayant de 1 à 6 atomes de carbone,
R₉ représente un alkylène ayant de 1 à 6 atomes de carbone,
R'₉ représente un alkyle ayant de 1 à 18 atomes de carbone,
R₁₀ représente un alkyle, un aryle, ou un aralkyle ayant de 8 à 32 atomes de carbone, et
X représente un halogène, OCN, SCN, SO₄CH₃ ou un acétate.

8. Procédé selon les revendications 1 à 6,
caractérisé en ce que
le monomère amphiphile a4) est
un composé de formules III et IIIa : 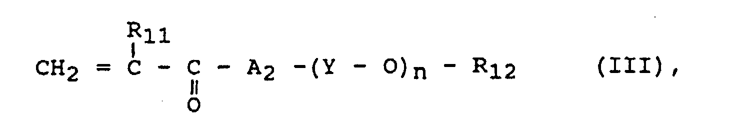 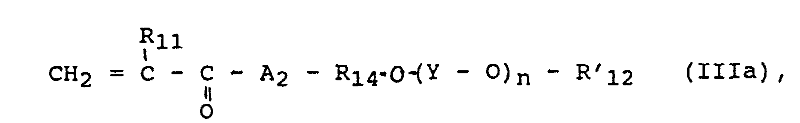 dans lesquelles
A₂ représente O, NH ou NR₁₃ avec R₁₃ représentant un alkyle avec de 1 à 4 atomes de carbone,
R₁₁ représente un hydrogène ou un méthyle,
R₁₂ représente un alkyle, un aryle ou un aralkyle ayant de 8 à 32 atomes de carbone,
R'₁₂ représente un hydrogène ou un alkyle ayant de 1 à 4 atomes de carbone,
R₁₄ représente un alkylène ayant de 1 à 18 atomes de carbone,
Y représente un alkylène ayant de 2 à 6 atomes de carbone et
n est un nombre entier compris entre 1 et 50.

9. Procédé selon les revendications 1 à 8,
caractérisé en ce que
le dispersant polymère D) est un polyélectrolyte ayant un poids moléculaire moyen Mw inférieur à 5 x 10⁵ daltons.

10. Procédé selon les revendications 1 à 9,
caractérisé en ce qu'
à la production du polymère A) en présence du dispersant polymère D) dans la première étape s'adjoint une seconde étape dans laquelle on ajoute à la dispersion de polymère soluble dans l'eau PD) une quantité supplémentaire de dispersant polymère D) en solution aqueuse.

11. Procédé selon la revendication 10,
caractérisé en ce qu'
au cours de la première étape de la production du polymère A) en présence du dispersant polymère D) et/ou entre la première et la seconde étape du procédé selon la revendication 10, on réduit la teneur en eau de la polymérisation PD).

12. Utilisation des dispersions de polymères produites au moyen du procédé selon les revendications 1 à 11,
comme agents de floculation pour particules en suspension électriquement chargées, comme agents de rétention pour la fabrication du papier, comme agents épaississants, comme constituants de revêtements de papier ou de tapis, comme agents déshydratants et/ou comme agents d'amélioration du sol.
